# EUROPEAN PATENT APPLICATION

(11) **EP 4 607 065 A1**
(43) Date of publication of application: **27.08.2025**
(21) Application number: 23879239.4
(22) Date of filing: 20.10.2023
(51) Int. Cl.: F16H 57/08, F16H 57/023

(54) **WIND TURBINE GEARBOX CONNECTING STRUCTURE AND GEARBOX**

(30) Priority: 21.10.2022 CN 202222780589 U
(71) Applicant: ZF Wind Power (Tianjin) Co., Ltd., Tianjin 300402 (CN); ZF Wind Power Antwerpen NV, 3920 Lommel (BE)
(72) Inventor: WU, Shubin, Tianjin 300402 (CN)
(74) Representative: ZF Friedrichshafen AG
(86) International application number: PCT/CN2023/125804
(87) International publication number: WO 2024/083254

(57) **Abstract**

A wind turbine gearbox connecting structure and a gearbox. The wind turbine gearbox connecting structure is used for connecting a sun shaft (1) and a planet carrier (2); and mutually matching butting surfaces are configured between the sun shaft (1) and the planet carrier (2), a plurality of mounting holes are formed in the butting surfaces to rigidly connect the sun shaft (1) to the planet carrier (2) by means of fixing members. In a wind turbine gearbox, the sun shaft (1) and the planet carrier (2) are connected by using the wind turbine gearbox connecting structure. The wind turbine gearbox connecting structure is simple in design and easy to operate, and the rigid connection of parts can be effectively achieved without heating the planet carrier, so that the manufacturing cost and the difficulty in field operation are reduced.

## Description

### TECHNICAL FIELD

The present disclosure relates to the field of wind power generation, and in particular to a wind turbine gearbox connecting structure and a gearbox.

### BACKGROUND ART

A doubly-fed wind turbine transmits a torque of wind turbine blades to a generator side by means of a multi-stage gear structure, to drive a generator rotor to rotate for power generation, the wind turbine blades are very large in size, and the rotational speed is low due to the limitations of structural strength thereof and wind strength. Therefore, it is required to increase the rotational speed of a transmission shaft of the wind turbine by using a multi-stage planet gear structure in a wind turbine gearbox, to drive a generator to operate normally. In a conventional design, a sun shaft and a planet carrier in a planet gear structure are configured to be rigidly connected by means of an interference spline, and the planet carrier needs to be heated during mounting or replacement, so that an operation can be completed by axially assembling the planet carrier with the sun shaft after thermal expansion of the planet carrier as well as meshing and tensioning of the interference spline after the planet carrier is cooled. This operation process is complex and is not conducive to an in-plant assembly and an outdoor on-site construction.

### SUMMARY

The present disclosure provides a wind turbine gearbox connecting structure, which can be mounted without heating.

According to an aspect of an embodiment of the present disclosure, a wind turbine gearbox connecting structure is provided. The connecting structure includes a sun shaft and a planet carrier, a first end of the sun shaft being connected to a previous stage of transmission structure of a wind turbine, a second end being connected to the planet carrier, and the planet carrier including a sun shaft connecting portion. The second end of the sun shaft and a first end of the planet carrier are provided with mutually matching butting surfaces, a plurality of mounting holes are circumferentially formed in the butting surfaces, and the sun shaft and the planet carrier are coaxially engaged along the butting surfaces and are rigidly connected by mounting a plurality of fixing members in the mounting holes. The connecting structure can replace a structurally complex interference spline to achieve the rigid connection of the sun shaft and the planet carrier. The manufacturing and mounting costs of parts are reduced, and the difficulty of mounting and maintenance operations is also reduced, facilitating an on-site construction.

Further, the butting surfaces are configured as end surfaces perpendicular to the axes of the sun shaft and the planet carrier. The butting surfaces are provided perpendicular to the end surfaces of the sun shaft and the planet carrier, and the fixing members are mounted parallel to the axes of the sun shaft and the planet carrier, so that the axial length of the sun shaft and the planet carrier can be reduced, it is conducive to the miniaturization of the transmission structure, and it is also convenient for the mounting operation.

Further, the butting surfaces of the sun shaft and the planet carrier are respectively provided with positioning structures for positioning when the sun shaft is engaged with the planet carrier. The positioning structures facilitate quick mounting and dismounting.

Further, the positioning structures are configured as positioning bosses, positioning key-slot structures, or protrusions and snap slots matching mutually.

Further, the plurality of fixing members are arranged uniformly in the circumferential direction of the sun shaft and the planet carrier. The uniformly arranged fixing members are conducive to uniform stressing on the sun shaft and the planet carrier.

Further, friction plates are provided on the butting surfaces. The friction plates are capable of improving a frictional force on the butting surfaces, thus improving torque transmission capability.

Further, connecting pins are provided on the butting surfaces. The connecting pin can ensure that there is no relative slippage on a joint surface of the sun shaft and the planet carrier when a torque exceeds an upper limit of frictional force transmission, thus ensuring the torque transmission.

Further, a distance between the connecting pin and the axis of the planet carrier is greater than a distance between the fixing member and the axis of the planet carrier. The connecting pins are provided on an outer side of the axis such that the connecting pins already participate in the torque transmission process under the condition of a small torque, thus minimizing the fretting wear of the joint surface.

Further, the mounting position of the connecting pin is provided between two adjacent fixing members. Both the sun shaft and the planet carrier are configured as parts having thin-walled structures, so that dense formed holes are prevented from affecting the mechanical strength of the parts.

Further, the fixing members are fixing bolts. The fixing bolts are manufacturing cost and convenient to mount and dismount, which is conducive to improving the maintenance convenience of the wind turbine gearbox.

According to another aspect of the present disclosure, a wind turbine gearbox is provided, and a sun shaft and a planet carrier in the gearbox use any one of the forgoing wind turbine gearbox structures. Since the connection of the interference spline is replaced by the fixing of the fixing members, the gearbox is smaller in size and convenient to mount, which facilitates an in-plant assembly and on-site repair and maintenance.

### BRIEF DESCRIPTION OF THE DRAWINGS

FIG. 1 is a partial structural schematic diagram of a section of a wind turbine gearbox connecting structure according to an embodiment; and
FIG. 2 is a partial structural schematic diagram of another section of a wind turbine gearbox connecting structure according to an embodiment.

The above drawings are intended to illustrate the present disclosure in detail such that those skilled in the art may understand the technical concept of the present disclosure, but are not intended to limit the present disclosure. For the sake of brevity, the above-mentioned drawings schematically depict only structures related to the technical features of the present disclosure, and do not draw a complete structure and all details strictly according to the actual scale.

### DETAILED DESCRIPTION OF EMBODIMENTS

The present disclosure will further be described in detail below in conjunction with specific embodiments with reference to the accompanying drawings.

The term "embodiment" mentioned herein means that the specific features, structures, or characteristics described in conjunction with the embodiment can be encompassed in at least one embodiment of the present application. The term appearing at various locations in the description does not necessarily refer to the same embodiment, nor is it limited to mutually exclusive independent or alternative embodiments. Those skilled in the art will appreciate that the embodiments herein may be combined with other embodiments without structural conflicts.

In the description herein, unless otherwise explicitly specified and defined, the technical terms such as "mount", "couple", and "connect" should be understood in a broad sense, for example, they may refer to a flexible connection, a fixed connection, or an integrated connection. For those of ordinary skill in the art, the specific meanings of the above terms in the embodiments of the present application can be understood according to specific situations.

In the description herein, the terms such as "upper", "lower", "left", "right", "circumferential", "radial" and "axial" that indicate orientation or positional relationships are intended to accurately describe the embodiments and to simplify the description, not to limit the parts or structures involved to a particular orientation, mounting or operation in a particular orientation, and are not to be construed as a limitation on the embodiments herein.

In the description herein, the terms "first", "second", etc. are merely used for distinguishing different objects, and are not to be construed as indicating relative importance or limiting the number, particular order or primary-secondary relationship of the mentioned technical features. In the description herein, "a plurality of" means at least two.

A sun shaft and a planet carrier in a wind turbine gearbox are typically connected by using an interference spline; however, the interference spline is assembled by thermally expanding the planet carrier and then meshing the planet carrier with the sun shaft together. This operation is complex and is not conducive to an in-plant assembly and an outdoor on-site operation, for example, under an offshore or mountainous condition. Also, the manufacturing cost of the spline is high, and once the spline is damaged, the parts can only be replaced as a whole.

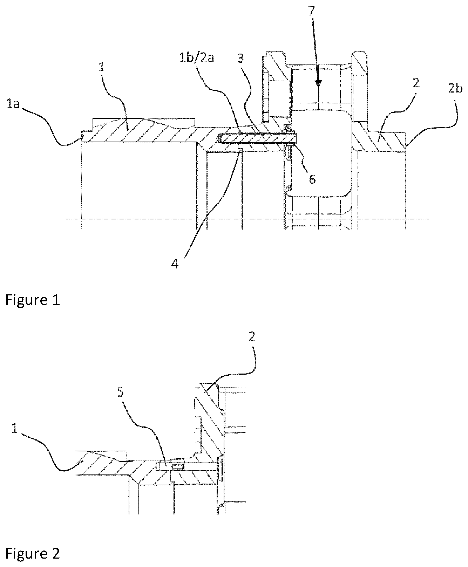

In order to solve the above problem, an embodiment in an aspect of the present disclosure provides a wind turbine gearbox connecting structure, and a partial structure of an axial section of the connecting structure is as shown in FIG. 1: a first end 1a of a sun shaft 1 is connected to a previous stage of transmission structure, and a second end 1b is connected to a planet carrier 2; the planet carrier 2 is connected to the second end 1b of the sun shaft by means of a sun shaft mounting portion 2a, and is connected to a next stage of transmission structure by means of a transmission portion 2b; where end surfaces of the second end 1b of the sun shaft 1 and of the sun shaft mounting portion 2a of the planet carrier 2 are configured as mutually matching butting surfaces. The second end 1b of the sun shaft 1 is circumferentially provided with a plurality of mounting holes, and mounting holes of the same size are formed at equal intervals, in a penetrating manner, at corresponding positions of the sun shaft mounting portion 2a of the planet carrier 2; and after the sun shaft 1 is engaged with the planet carrier 2 along the butting surfaces, fixing bolts 3 are inserted into the mounting holes from one side of the sun shaft 2, and nuts 6 are used for fastening to achieve the rigid connection of the sun shaft 1 and the planet carrier 2. A mounting groove 7 is formed between the sun shaft mounting portion 2a and the transmission portion 2b of the planet carrier 2, and an operating space is provided for the mounting of the fixing bolts 3 and the tightening of the nuts 6. This connecting structure can replace the interference spline to achieve the rigid connection of the sun shaft 1 and the planet carrier 2, and a machining process requires only hole forming in a mounting surface, so that the manufacturing cost is low, the mounting and dismounting are simple, heating the planet carrier is not needed, and convenience is provided for an on-site operation under a field condition. In other embodiments, the fixing bolt 3 as a fixing member may also be replaced by a rivet, a fixing pin, or other connecting members having the same function.

In other embodiments, the butting surfaces of the sun shaft 1 and the planet carrier 2 may also be configured as an outer side surface of the sun shaft and an inner side surface of the planet carrier 2.

In a preferred embodiment, the butting surfaces of the sun shaft 1 and the planet carrier 2 are further provided with positioning structures 4, and the positioning structures 4 may be configured as annular bosses protruding from the butting surfaces, so that it is convenient to align the sun shaft 1 with the planet carrier 2 during engagement. In other optional embodiments, the positioning structures may be configured as positioning key-slot structures or protrusions and snap slots matching mutually, which allows for alignment positioning while facilitating the mutual alignment of the second end 1b of the sun shaft 1 with the mounting holes in the sun shaft mounting portion 2a of the planet carrier 2.

In a preferred embodiment, the mounting holes in the butting surfaces and the fixing bolts 3 are uniformly distributed at equal intervals in a circumferential direction, so that all regions on the butting surfaces are balanced in stress and have equal gaps to prevent the misalignment of the axes of the sun shaft 1 and the planet carrier 2.

In a preferred embodiment, friction plates are further provided on the butting surfaces of the sun shaft 1 and the planet carrier 2 and are capable of increasing a frictional force on the butting surfaces, so that torque conduction is performed between the sun shaft 1 and the planet carrier 2 by means of the frictional force on the butting surfaces after the nuts 6 are tightened, the frictional force on the butting surfaces can be increased, the torque transmission capability can be enhanced, the fretting wear of a joint surface can be reduced, and the shear damage to the fixing bolts 3 can be avoided.

In a preferred embodiment, as shown in FIG. 2, the butting surfaces between the sun shaft 1 and the planet carrier 2 are further provided with connecting pins 5, and the connecting pins 5 penetrate the sun shaft mounting portion 2a of the planet carrier 2 and are inserted into the second end 1b of the sun shaft to provide the rigid fixed connection in the circumferential direction. When the torque between the sun shaft 1 and the planet carrier 2 exceeds an upper limit of the frictional force on the butting surfaces, the connecting pins 2 are subjected, by virtue of the own rigidity thereof, to a shear force brought by the torque, thereby achieving torque transmission. In a further preferred embodiment, a distance between the connecting pin 5 and the axis of the planet carrier 2 is greater than a distance between the fixing bolt 3 and the axis of the planet carrier 2, that is, the connecting pin 5 is arranged at a position on the butting surface close to an outer side, so that the connecting pin 5 can more effectively bear a shear action brought by the torque, ensuring the torque transmission. In a further preferred embodiment, the mounting position of the connecting pin 5 is located between two adjacent fixing bolts 3. In order to reduce the weight of the parts, the sun shaft and the planet carrier are preferably configured as thin-walled structures, and arranging the connecting pins 5 and the fixing bolts 3 at intervals is favorable to avoiding the reduction in the mechanical strength of the parts due to the gathering of the formed holes.

According to an embodiment in another aspect of the present disclosure, a wind turbine gearbox is provided. The gearbox uses a wind turbine gearbox connecting structure in any one of the foregoing embodiments to achieve the rigid connection between the sun shaft and the planet carrier. Since the interference spline is replaced by a bolted connection, the gearbox is convenient and fast to mount and dismount without heating the planet carrier, and the operation is simple under outdoor complex and harsh operating conditions, for example, an offshore or mountainous condition; moreover, due to the omission of a spline structure, the manufacturing cost of the parts is reduced, and it is also favorable to a miniaturization design of the gearbox.

The embodiments are intended to further illustrate the present disclosure in detail in conjunction with the accompanying drawings, such that those skilled in the art can understand the technical concept of the present disclosure. The optimization or equivalent substitution of structures of the parts involved within the scope defined by the claims of the present disclosure and the combinations of implementations in different embodiments without structure and principle conflicts both fall within the scope of protection of the present disclosure.

## Claims

1. A wind turbine gearbox connecting structure, comprising a sun shaft and a planet carrier, a first end of the sun shaft being connected to a previous stage of transmission structure of a wind turbine, a second end being connected to the planet carrier, and the planet carrier comprising a sun shaft connecting portion; wherein the second end of the sun shaft and the sun shaft connecting portion of the planet carrier are provided with mutually matching butting surfaces, a plurality of mounting holes are circumferentially formed in the butting surfaces, and the sun shaft and the planet carrier are coaxially engaged along the butting surfaces and are rigidly connected by mounting a plurality of fixing members in the mounting holes.

2. The wind turbine gearbox connecting structure according to claim 1, wherein the butting surfaces are configured as end surfaces perpendicular to the axes of the sun shaft and the planet carrier.

3. The wind turbine gearbox connecting structure according to claim 2, wherein the butting surfaces of the sun shaft and the planet carrier are respectively provided with positioning structures for positioning when the sun shaft is engaged with the planet carrier.

4. The wind turbine gearbox connecting structure according to claim 3, wherein the positioning structures are configured as positioning bosses, positioning key-slot structures, or protrusions and snap slots matching mutually.

5. The wind turbine gearbox connecting structure according to claim 1 or 2, wherein the plurality of fixing members are arranged uniformly in the circumferential direction of the sun shaft and the planet carrier.

6. The wind turbine gearbox connecting structure according to claim 1 or 2, wherein friction plates are provided on the butting surfaces.

7. The wind turbine gearbox connecting structure according to claim 1 or 2, wherein connecting pins are provided on the butting surfaces.

8. The wind turbine gearbox connecting structure according to claim 7, wherein a distance between the connecting pin and the axis of the planet carrier is greater than a distance between the fixing member and the axis of the planet carrier.

9. The wind turbine gearbox connecting structure according to claim 8, wherein the mounting position of the connecting pin is provided between two adjacent fixing members.

10. The wind turbine gearbox connecting structure according to claim 1 or 2, wherein the fixing members are fixing bolts.

11. A wind turbine gearbox for connecting a low-speed shaft of a wind turbine to an input shaft of a generator, wherein a sun shaft and a planet carrier in the wind turbine gearbox are connected by using a wind turbine gearbox connecting structure as claimed in any one of claims 1 to 10.
